# EUROPEAN PATENT APPLICATION

(11) **EP 4 787 869 A1**
(43) Date of publication of application: **05.08.2026**
(21) Application number: 25812616.8
(22) Date of filing: 02.05.2025
(51) Int. Cl.: H04N 21/443, H04N 21/442, H04N 7/18, G06V 40/16

(54) **VIDEO PROVIDING SYSTEM AND VIDEO PROVIDING METHOD**

(30) Priority: 21.11.2024 KR 20240167353
(71) Applicant: RNR Inc., Seoul 04782 (KR)
(72) Inventor: SEOK, Min Cheol, Gwacheon-si, Gyeonggi-do 13813 (KR)
(74) Representative: AWA Sweden AB
(86) International application number: PCT/KR2025/005996
(87) International publication number: WO 2026/111056

(57) **Abstract**

Proposed are a video providing system and a video providing method, wherein the system includes: a display unit disposed in a viewer space; an image capturing device disposed in the display unit or the viewer space; at least one viewer terminal configured to provide a video to the display unit; and a server configured to communicate with the display unit, the image capturing device, and the viewer terminal and to provide an externally supplied video to the display unit or the viewer terminal.

## Description

### Technical Field

The present disclosure relates to a video providing system having an improved structure and a video providing method.

### Background Art

Commercial video content such as movies is generally first screened in theaters and, after the theater run ends, is subsequently distributed through Internet Protocol Television (IPTV), Over The Top (OTT) services, and television in sequence.

This is because the revenue structure of film producers or distributors originates from viewing fees paid by individual audience members.

Accordingly, when a viewer wishes to watch video content on a personal display device such as a TV, mobile device, or PC at home or in a vehicle (an atypical content-providing space) rather than in a theater, there is a problem in that the viewer must wait for a certain period of time before the content becomes available.

Meanwhile, after the COVID-19 pandemic, people have increasingly preferred to spend their leisure time in private spaces such as a home or a vehicle (an atypical content-providing space), rather than in public places such as movie theaters.

To reflect such user needs and the revenue structure of film producers or distributors, the Applicant has devised a technical concept for counting the number of paying viewers in atypical content-providing spaces (see Korean Patent No. 10-2478139, entitled: "Method and Apparatus for Managing the Number of Users in a Smart Content Providing System").

When a viewer selects and watches a particular video in such atypical spaces, environmental factors such as leaving the viewing space briefly to receive a food delivery or to use the restroom may give rise to the following problems.

When there is no limit on the number of times the video can be viewed, this generally does not pose a significant problem. However, when there is a limit on the number of viewings, if the viewer temporarily leaves the viewing space, and the video ends during that time, the viewer may be unable to watch the corresponding content again, which can give rise to a problem.

Moreover, when the viewer temporarily leaves the viewing space, there is the inconvenience of having to pause the video by using a device such as a remote control. Otherwise, the viewer faces the inconvenience of having to locate the point previously watched and replay it.

### Disclosure

### Technical Problem

The present disclosure has been devised to solve the above-described problems, and an objective of the present disclosure is to provide a video providing system and a video providing method improved to allow a viewer in an atypical content-providing space, such as a home or a vehicle, to watch the entire video content without missing any portions, even if temporarily leaving the viewing space, without using separate devices such as a remote control.

### Technical Solution

In order to accomplish the above objectives, the present disclosure provides a video providing system including: a display unit disposed in a viewer space; an image capturing device disposed in the display unit or the viewer space; at least one viewer terminal configured to provide a video to the display unit; and a server configured to communicate with the display unit, the image capturing device, and the viewer terminal and to provide an externally supplied video to the display unit or the viewer terminal.

In addition, the server may include: a video transmission unit configured to provide the externally supplied video to the display unit or the viewer terminal; an image processing unit configured to generate, in a time series, image frames from a viewer-space image received from the image capturing device and to separate and extract human faces in the generated image frames; a counting unit configured to count a number of persons from the human faces generated by the image processing unit; and a video control unit configured to stop the provision of the video when the number of persons counted by the counting unit does not satisfy a preset number of persons after the video is transmitted by the video transmission unit.

In addition, when a number of persons initially counted by the counting unit is n, the preset number of persons for stopping the provision of the video by the video control unit may be n-1.

In addition, the preset number of persons for stopping the provision of the video by the video control unit may be changeable through the viewer terminal.

In addition, the video control unit may resume playback of the video when the number of persons counted by the counting unit satisfies a number of persons initially counted by the counting unit after the video is stopped.

In addition, the video control unit may resume the playback of the video from a time preset before a portion at which the provision of the video is stopped.

In addition, the server may further include a playback intention provision unit configured to inquire, to the display unit or the viewer terminal, whether to resume playback of the video when the number of persons counted by the counting unit does not satisfy a number of persons initially counted by the counting unit even after a preset time has elapsed after the video is stopped.

Meanwhile, the present disclosure provides a video providing method including: counting, in real time, an actual number of persons viewing by using a viewer-space image received through an image capturing device disposed in a display unit or a viewer space; providing an externally supplied video to the display unit or a viewer terminal; and stopping the provision of the video when the number of persons counted does not satisfy a preset number of persons after the video is transmitted.

In addition, the video providing method may further include: resuming playback of the video when the number of persons counted by the counting unit satisfies an initially counted number of persons after the stopping of the provision of the video.

In addition, the video providing method may further include: inquiring, to the display unit or the viewer terminal, whether to resume playback of the video when the number of persons counted does not satisfy an initially counted number of persons even after a preset time has elapsed after the stopping of the provision of the video.

### Advantageous Effects

According to the present disclosure, the number of viewers is counted in real time and a video is automatically paused or played depending on whether a preset number of viewers is satisfied, and thus a viewer in an atypical content-providing space can conveniently watch the entire video without missing any portions without using separate devices such as a remote control.

### Description of Drawings

FIG. 1 is a schematic block diagram of a video providing system according to an embodiment of the present disclosure.
FIG. 2 is a schematic flowchart of a video providing method according to an embodiment of the present disclosure.

### Mode for Invention

Hereinafter, preferred embodiments of the present disclosure will be described in detail with reference to the accompanying drawings.

Unless otherwise specifically defined, all terms used in this specification have the same meaning as the ordinary meaning understood by those skilled in the art, and when any term used in this specification conflicts with the ordinary meaning of the term, the definition used in this specification shall prevail.

However, the present disclosure described below is provided merely to illustrate embodiments of the present disclosure and is not intended to limit the scope of the present disclosure, and reference numerals used consistently throughout the specification denote the same components.

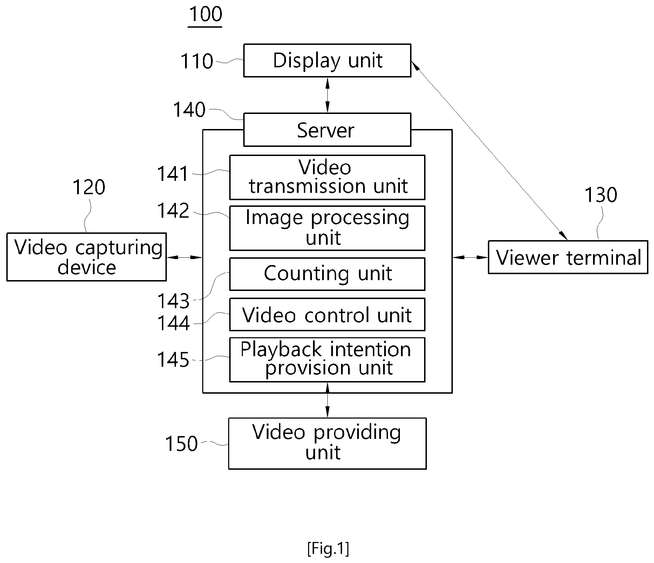

FIG. 1 is a schematic block diagram of a video providing system according to an embodiment of the present disclosure.

Referring to FIG. 1, a video providing system 100 according to an embodiment of the present disclosure may generally include a display unit 110, an image capturing device 120, a viewer terminal 130, a server 140, and a video providing unit 150.

The display unit 110 may be disposed in a viewer space, where the viewer space may refer to any space in which a viewer can watch a video (for example, inside a building or inside a vehicle).

The display unit 110 may receive a video signal from the server 140 described below and display it on the screen, and may be disposed at a location convenient for a viewer to recognize. The display unit 110 may be configured as an embedded computer including a display panel and a small wireless communication function, or may be a liquid crystal screen of the viewer terminal 130 described below.

The image capturing device 120 may be disposed in the display unit 110 or in the viewer space, and may capture the space in which a viewer watches a video.

The viewer terminal 130 may include the display unit 110, or may provide a video to the display unit 110 disposed separately. Since there may be a plurality of viewers, the viewer terminal 130 may include one or more viewer terminals 130.

Here, the terminal may be configured to access the server 140 or another terminal remotely via a network, and may be a cellular phone, a personal communication service phone (PCS phone), a personal digital assistant (PDA), a wireless application protocol phone (WAP phone), a smartphone, or a tablet, but is not limited thereto.

The server 140 may communicate with the display unit 110, the image capturing device 120, and the viewer terminal 130, and may provide an externally supplied video to the display unit 110 or the viewer terminal 130.

Specifically, the server 140 may include a video transmission unit 141, an image processing unit 142, a counting unit 143, a video control unit 144, and a playback intention provision unit 145.

The video transmission unit 141 may provide an externally supplied video, such as that from the video providing unit 150 described below, to the display unit 110 or the viewer terminal 130.

The image processing unit 142 may generate, in a time series, image frames from a viewer-space image received from the image capturing device 120, and may separate and extract human faces within the generated image frames.

The counting unit 143 may calculate the number of persons from the human faces generated by the image processing unit 142.

That is, the image processing unit 142 may generate image frames in a time series at preset time intervals, and therefore, the counting unit 143 may identify changes in the number of viewers while a video is being played.

The video control unit 144 may stop the provision of the video when the number of persons counted by the counting unit 143 does not satisfy a preset number of persons after the video is transmitted by the video transmission unit 141.

Specifically, when the number of persons initially counted by the counting unit 143 is n, the preset number of persons for stopping the provision of the video by the video control unit 144 may be n-1.

That is, when any one of a plurality of viewers leaves the viewer space, or when a single viewer who is watching the video leaves the viewer space, the video control unit 144 may stop the provision of the video.

Here, the preset number of persons for stopping the provision of the video by the video control unit 144 may be changed through the viewer terminal 130.

That is, when the preset number of persons for stopping the provision of the video is m, m may be greater than 1 but may not exceed the initial number of persons n.

For example, when m is set to 2 at the viewer terminal 130, the provision of the video may be stopped when two persons have left from the initially counted group of persons.

In addition, the video control unit 144 may resume playback of the video when the number of persons counted by the counting unit 143 satisfies the initially counted number of persons after the video is stopped.

Alternatively, after the video is stopped, the video control unit 144 may resume playback of the video when the number of persons satisfies the number of persons set at the viewer terminal 130.

Here, the video control unit 144 may resume playback of the video from a time preset before a portion at which the provision of the video is stopped. For example, the preset time may be 30 seconds but is not limited thereto, and the preset time may be changed at the viewer terminal 130.

Therefore, the video providing system 100 according to an embodiment of the present disclosure may automatically stop or resume a video when a viewer leaves the viewer space, so that the viewer is not required to operate a separate device such as a remote control, thereby allowing the viewer to watch the video conveniently.

The playback intention provision unit 145 may inquire, to the display unit 110 or the viewer terminal 130, whether to resume playback of the video when the number of persons counted by the counting unit 143 does not satisfy the initially counted number of persons even after a preset time has elapsed after the video is stopped.

Here, the indication of intention displayed by the playback intention provision unit 145 may be displayed as symbols, characters, and/or figures.

For example, the indication of intention may include a message such as "Do you wish to continue watching this video?" or a textual message such as "From what point would you like to resume watching this video?"

In this case, the viewer terminal 130 may transmit to the server 140 an indication to continue watching (displayed as a touch area), or may transmit to the server 140, for example, an indication to watch 10 minutes later (displayed as a time input area).

The video providing unit 150 provides video content to the server 140 from an external source, and may, for example, be a terminal of a video producer or distributor.

The video providing system 100 of the present disclosure may be implemented in the following manner.

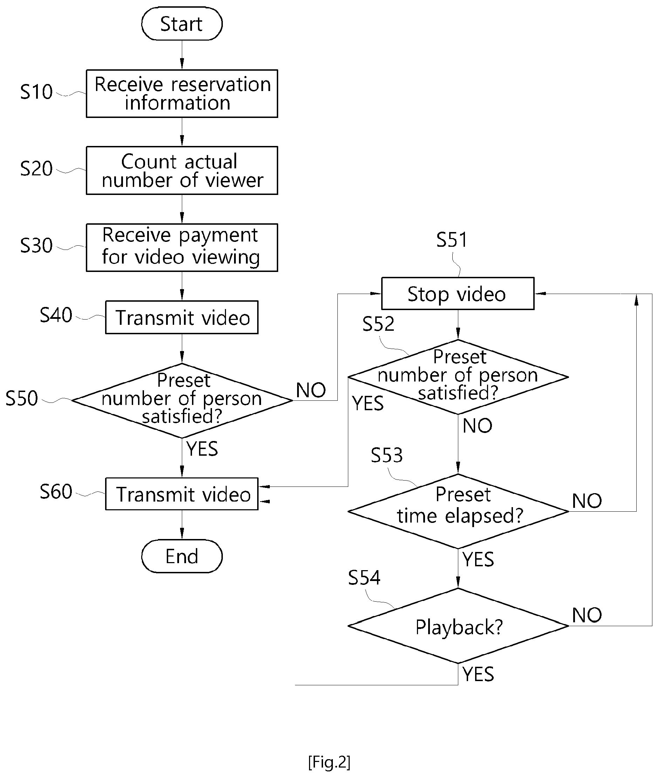

FIG. 2 is a schematic flowchart of a video providing method according to an embodiment of the present disclosure.

First, the server 140 may receive reservation information from the viewer terminal 130, the reservation information including a video to be viewed and the number of viewers (S10).

Subsequently, the server 140 may count the actual number of viewers by using the viewer-space image received through the display unit 110 or the image capturing device 120 disposed in the viewer space (S20).

Specifically, the image processing unit 142 of the server 140 may perform the image processing of human faces in video information captured by the image capturing device 120 disposed in the viewer space to calculate the number of viewers.

Subsequently, the server 140 may receive payment for viewing a video based on the number of viewers from the viewer terminal 130 (S30).

Subsequently, the server 140 may provide the externally supplied video to the display unit 110 (S40).

Subsequently, the server 140 may perform the image processing and count the number of persons viewing in real time by using the video received from the image capturing device 120 at preset intervals, and, after the video is transmitted, may determine whether the counted number of persons satisfies the preset number of persons (S50).

When the counted number of persons satisfies the preset number of persons, the video may continue to be transmitted, and when the counted number of persons does not satisfy the preset number of persons, the provision of the video may be stopped (S51)..

After the stopping of the provision of the video, playback of the video may be resumed when the number of persons counted by the counting unit satisfies the initially counted number of persons (S52).

After the stopping of the provision of the video, when the number of persons counted by the counting unit does not satisfy the initially counted number of persons, the server 140 may determine whether a preset time has elapsed (S53), and when the counted number of persons still does not satisfy the initially counted number of persons even after the preset time, may inquire to the display unit 110 or the viewer terminal 130 whether to resume the playback of the video (S54).

In summary, according to the present disclosure, the number of persons viewing is counted in real time and a video is automatically stopped or resumed depending on whether the preset number of persons is satisfied, thereby providing the advantage that, even in an atypical space, viewers can conveniently watch the entire video content without missing any portion thereof and without the need for a separate device such as a remote control.

From the above description, it will be understood by those skilled in the art that various modifications and changes can be made without departing from the technical concept of the present disclosure, and that the technical scope of the present disclosure is not limited to the contents described in the embodiments, but should be determined by the claims and their equivalents.

## Claims

1. A video providing system comprising:
a display unit disposed in a viewer space;
an image capturing device disposed in the display unit or the viewer space;
at least one viewer terminal configured to provide a video to the display unit; and
a server configured to communicate with the display unit, the image capturing device, and the viewer terminal and to provide an externally supplied video to the display unit or the viewer terminal.

2. The video providing system of claim 1, wherein the server comprises:
a video transmission unit configured to provide the externally supplied video to the display unit or the viewer terminal;
an image processing unit configured to generate, in a time series, image frames from a viewer-space image received from the image capturing device and to separate and extract human faces in the generated image frames;
a counting unit configured to count a number of persons from the human faces generated by the image processing unit; and
a video control unit configured to stop the provision of the video when the number of persons counted by the counting unit does not satisfy a preset number of persons after the video is transmitted by the video transmission unit.

3. The video providing system of claim 2, wherein when a number of persons initially counted by the counting unit is n, the preset number of persons for stopping the provision of the video by the video control unit is n-1.

4. The video providing system of claim 2, wherein the preset number of persons for stopping the provision of the video by the video control unit is changeable through the viewer terminal.

5. The video providing system of claim 2, wherein the video control unit resumes playback of the video when the number of persons counted by the counting unit satisfies a number of persons initially counted by the counting unit after the video is stopped.

6. The video providing system of claim 5, wherein the video control unit resumes the playback of the video from a time preset before a portion at which the provision of the video is stopped.

7. The video providing system of claim 2, wherein the server further comprises a playback intention provision unit configured to inquire, to the display unit or the viewer terminal, whether to resume playback of the video when the number of persons counted by the counting unit does not satisfy a number of persons initially counted by the counting unit even after a preset time has elapsed after the video is stopped.

8. A video providing method comprising:
counting, in real time, an actual number of persons viewing by using a viewer-space image received through an image capturing device disposed in a display unit or a viewer space;
providing an externally supplied video to the display unit or a viewer terminal; and
stopping the provision of the video when the number of persons counted does not satisfy a preset number of persons after the video is transmitted.

9. The video providing method of claim 8, further comprising:
resuming playback of the video when the number of persons satisfies an initially counted number of persons after the stopping of the provision of the video.

10. The video providing method of claim 8, further comprising:
inquiring, to the display unit or the viewer terminal, whether to resume playback of the video when the number of persons counted does not satisfy an initially counted number of persons even after a preset time has elapsed after the stopping of the provision of the video.
